# DEMANDE DE BREVET EUROPEEN

(11) **EP 1 057 764 A1**
(43) Date de publication de la demande: **06.12.2000**
(21) Numéro de dépôt: 00390009.9
(22) Date de dépôt: 10.05.2000
(51) Int. Cl.: B65H 49/32, A01G 17/08, A01G 25/02, B65H 75/44

(54) **Dévidoir de fil et/ou de tuyau au goutte à goutte sur un châssis tracté**

(30) Priorité: 25.05.1999 FR 9906556
(71) Demandeur: Ramon, André, 34440 Missan les Enserune (FR)
(72) Inventeur: Ramon, André, 34440 Missan les Enserune (FR)

(57) **Abrégé**

Dispositif d'un ensemble de dévidoirs notamment de fil de fer ou nylon et/ou de tuyaux pour goutte à goutte sur châssis tracté servant simultanément ou individuellement en viticulture et en arboriculture.

Ce dispositif comporte en combinaison:
a) un châssis formé d'un tube carré (1) soudé perpendiculairement à un essieu (2) sur lequel est fixé à l'avant un timon (3) le reliant à un tracteur;
b) deux dévidoirs (6) de fils sont montés sur tubes (7) perpendiculaires à l'essieu (2);
c) un dévidoirs (26) pour un tuyau goutte à goutte avec un système de freinage est monté sur le support (4) de réserve de fil;
d) à l'avant de l'essieu (2) un support de réserve (4) de six rouleaux de fils, une réserve de tuyaux situés à l'arrière de l'essieu entre les deux tubes (10) de haubanage;
e) un siège réglable (8) sur un amortisseur avec un repose-pied (9) installé à l'extrémité arrière du tube carré (1) permet à une personne de surveiller le déroulement du travail avec possibilité de freiner les dévidoirs;
f) un marche pied (5) à l'arrière entre l'essieu et le siège aide à la recharge des deux dévidoirs (6) de fils;
g) de part et d'autre du marche pied (5) sont fixés perpendiculairement deux tubes carrées (35) supportant les éléments de guidage (28-34) du fil de fer et du goutte à goutte.

## Description

Cet appareil tracté servant simultanément ou individuellement en viticulture et en arboriculture comporte en combinaison:
- Un châssis formé d'un tube carré (1) soudé perpendiculairement à un essieu (2) sur lequel est fixé à l'avant un timon (3) le reliant au tracteur.
- Un support (4) de réserve de six rouleaux de fil de fer.
- Une plate forme (5) à l'arrière donne accès aux deux dévidoirs (6) montés sur tubes (7) perpendiculaires à l'essieu (2).
- Le siège réglable (8) sur amortisseur avec repose-pieds réglable (9) installé à l'arrière permet à une personne de contrôler le déroulement du travail avec possibilité de freiner les dévidoirs.
- Le dévidoir (26) pour tuyaux, goutte à goutte est monté sur le support (4) de réserve de fil de fer.
- L'emplacement prévu pour réserve de tuyaux goutte à goutte se situe entre les tubes (10).

Cette invention a été conçue pour dérouler sans aucun effort et rapidement des fils de fer servant au palissage ainsi que des tuyaux pour goutte à goutte en viticulture et arboriculture.

Actuellement la distribution des rouleaux de fil de fer s'effectue pédestrement et manuellement. Dans ce cas l'utilisateur place le dévidoir en bout d'une rangée et tire sur l'extrémité du fil ou bien il s'effectue par un système de brouettes sur lesquelles est monté un dévidoir que l'utilisateur doit pousser.

Cette invention a pour but de pallier aux divers inconvénients connus actuellement et de proposer une distribution très rapide et sans peine.

La description de cette invention va permettre d'en caractériser les avantages et les dessins annexés illustreront l'invention.
La figure 1 représente une vue perspective du châssis tracté supportant les dévidoirs de fil de fer et le dévidoir de tuyaux pour le goutte à goutte.
Les figures 2 et 3 représentent une coupe détaillée des dévidoirs ainsi qu'un cerceau Figure 4 servant à éviter le débordement du tuyau goutte à goutte.
Les figures 5 et 6 représentent les éléments mécaniques de guidage pour la distribution du goutte à goutte (28) et du fil de fer (34).

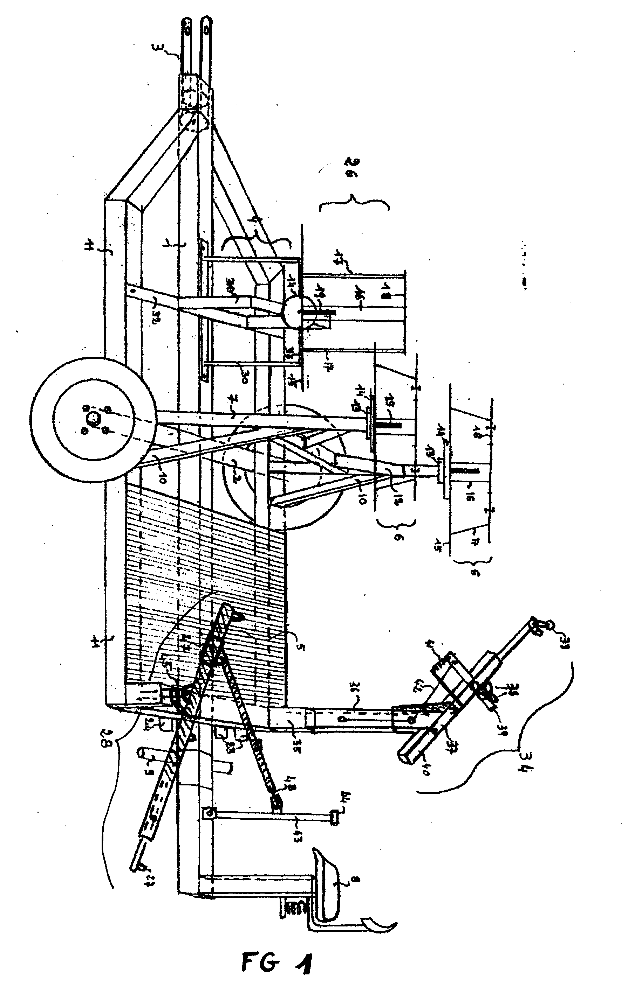

Dans la figure 1 on voit que le châssis tracté est composé d'un tube carré (1) fixé perpendiculairement à un essieu (2) par deux brides renforcées par une soudure. A l'avant du tube carré (1) un timon (3) se fixe sur la barre à trou du tracteur.

Le support (4) de réserve des rouleaux de fil de fer entre le timon et l'essieu est conçu par quatre barres verticales (30) soudées à des barres horizontales (32) boulonnées aux tubes (1) et (11). L'ensemble est renforcé par quatre barres (33) horizontales soudées aux quatre barres (30) perpendiculaires.

La plate forme (5) située à l'arrière de l'essieu permet d'avoir accès très facilement à la recharge des dévidoirs (6).

Les dévidoirs (6) sont supportés par deux tubes (7) soudés à la base sur l'essieu (2) et haubanés par deux tubes (10) à deux tubes (11). Un deuxième haubanage (12) est fixé sur la partie supérieure des tubes (7) et est relié à un tube parallèle à l'essieu et perpendiculaire aux tubes (7). Sur la partie supérieure des tubes (7) est soudé un disque (13) avec un axe central (19) qui permet de faire tourner les dévidoirs (6). Ces dévidoirs (6) Figures 2 et 3 sont constitués d'un disque plus grand (14) que le disque (13) pour servir de freins. Deux barres (15) perpendiculaires aux tubes (7) soudées horizontalement sur le disque (14) sont surmontées d'un tube creux (16) qui relie les barres (18).

Les barres (17) en forme de trapèze sont soudées sur les barres (15) et réunies entre elles par des barres horizontales (18), le tout relié au tube creux (16) qui s'emboîte sur l'axe central (19).

Sur chacune des barres (18) des dévidoirs (6), un trou central (20) est effectué ainsi qu'une lumière (21) permettant le pivotement d'une barre (22) afin de charger le dévidoir que l'on remet en place après le chargement.

Les barres (18) et (22) sont réunies entre elles par un boulon (29) à oreilles ce qui évite l'utilisation d'une clef.

Le guidage des fils de fer se fait par l'intermédiaire d'un ensemble mécanique (34) FIG 6, qui permet à la fois de régler la hauteur et la largeur de cette distribution, soit au sol soit sur les piquets de vigne servant pour le palissage. Cet ensemble est constitué d'un tube carré (36) qui s'emboîte dans le support (35) FIG 1, et sur lequel une potence mobile (37) permet de régler la hauteur. Le fil de fer est guidé par trois bobines (38) fixées sur un T mobile (39) lui-même fixé sur un tube carré (40) qui coulisse latéralement sur la potence (37). Un ressort de rappel (41) et un câble (42), contrôlé par la personne assise sur le siège (8) à l'aide d'un levier (43) fixé entre le repose-pieds et le siège, ramène le T (39) à sa position initiale.

De part et d'autre de la poutre centrale (1) à l'avant du repose-pieds (9) sont fixés à droite deux pédales de freins (23) pour le dévidoir de droite et le dévidoir du goutte à goutte, et à gauche une pédale (24) permettant de freiner le dévidoir de gauche.

Ces freinages sont constitués d'une gaine et d'un câble qui vont freiner au niveau du disque (14). Un fer plat (25) FIG 2 , monté sur pivot avec un patin en caoutchouc est soudé sur les tubes (7) pour les dérouleurs de fils de fer, et un fer plat (25) FIG 2 , monté sur pivot avec un patin en caoutchouc est soudé sur une des barres (33) de la réserve (4) font office de freins.

Un ressort de rappel supprime le freinage.

En référence à la figure 2, le dévidoir (26), sur la FIG 1, du tuyau pour goutte à goutte est identique aux dévidoirs (6) dans sa conception avec la différence qu'il est beaucoup plus haut et droit.

Les barres (17) sont soudées perpendiculairement sur les barres (15) et (18), et les barres (22) sont supprimées.

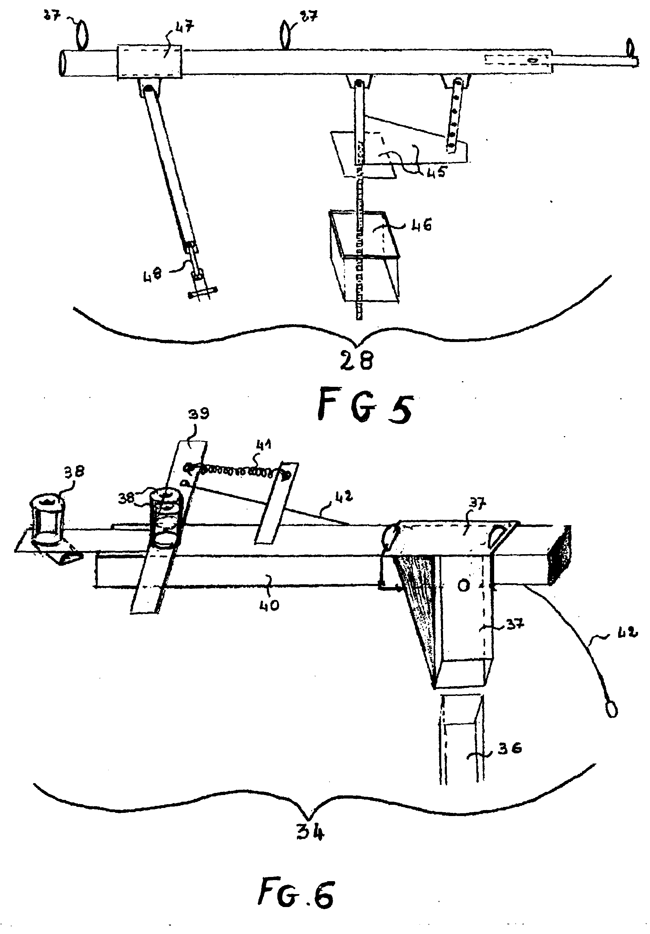

Le tuyau du goutte à goutte est amené au pied de la souche ou de l'arbre par des anneaux (27) FIG 5 sur un tube (28) télescopique et réglable en hauteur par une crémaillère (45) sur un des supports (35) FIG 1, dans lequel se positionne un embout (46) assurant le pivotement soit à droite soit à gauche de l'appareil grâce à deux articulations (47) et (48). Cet ensemble est contrôlé à l'aide du levier (43) qui actionne un klaxon, ou un témoin lumineux, pour le démarrage, ou l'arrêt, du conducteur du tracteur.

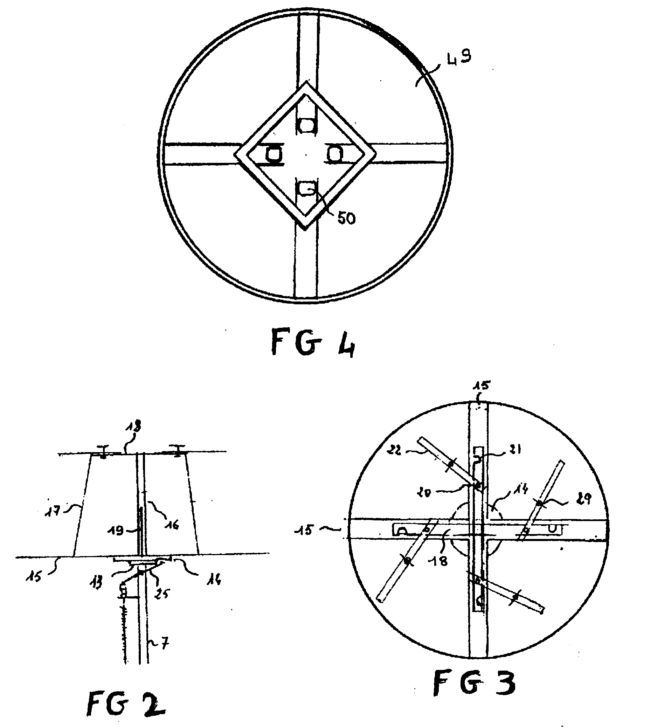

Pour éviter le débordement du tuyau goutte à goutte un cerceau (49) FIG 4, muni de galets (50), descend le long des barres (17) FIG 1 au fur et à mesure du dévidage.

## Revendications

1. Dévidoirs de fil de fer ou de nylon et/ ou de tuyaux sur châssis tracté en ce qu'il comprend un châssis formé d'au moins un tube carré (1) soudé perpendiculairement à un essieu (2) relié à un tracteur par un timon (3) le châssis supportant au moins un des dévidoirs (6, 26).

2. Dispositif selon la revendication 1 caractérise en ce qu'il comprend un dévidoir de tuyaux (26) pour goutte à goutte qui peut dévider soit à droite soit à gauche du châssis grâce à l'ensemble (28) constitué d'un tube cylindrique télescopique guidé par des anneaux (27) fixés sur ce tube, réglable en hauteur par une crémaillère (45) sur un des supports (35) dans lequel se positionne un embout (46) assurant le pivotement grâce à deux articulations (47, 48). Cet ensemble (28) est contrôlé par un levier (43) avec avertisseur d'arrêt ou de marche (44).

3. Dispositif selon la revendication 1 caractérisé en ce qu'il comprend une réserve (4) de six rouleaux de fil de fer et d'un emplacement réservé pour le tuyaux goutte à goutte.

4. Dispositif selon la revendication 1 caractérisé en ce que le dévidoir (26) situé sur la réserve de fil de fer (4) est constitué de barres (17) perpendiculaires aux barres (15, 18) soudées entre elles , ainsi qu 'à un tube central (16) dans lequel pénètre un axe (19) permettant la rotation. Un disque (14) soudé à la base de cet ensemble (26) plus grand que le disque (13) servant de support, assure le freinage à partir de la pédale (23). Le frein (25) est constitué d' un fer plat sur pivot au niveau de la barre (33) muni d'un patin caoutchouc.

5. Dispositif selon la revendication 2 caractérisé en ce qu 'un cerceau (49) (sur lequel sont fixés à l'intérieur et face à face 4 galets (50) ) coulisse le long des quatre barres (17) et par pression évite le débordement lors du dévidage.

6. Dispositif selon la revendication 1 caractérisé en ce qu'il comprend une plate forme (5) à l'arrière du châssis donnant accès aux dévidoirs (6).

7. Dispositif selon la revendication 1 caractérisé en ce qui concerne les dévidoirs (6) comprenant une barre (18) percée d'un trou (20) permettant une articulation de la barre (22) le boulon (29) avec écrou à oreille (qui évite l'utilisation d'une clef) s'encastre dans la lumière (21) et permet de fixer la barre (22) dans le prolongement de la barre (18).

8. Dispositif selon la revendication 7 caractérisé en ce qui concerne les dévidoirs (6) en ce qu'ils comprennent un disque (14) servant pour le freinage .Le mécanisme (25) assurant le freinage est commandé par les pédales (23,24).

9. Dispositif selon la revendication 1 caractérisé en ce que le guidage des fils est positionné soit aux pieds soit sur le haut des piquets avec barrettes ou encoches, par un ensemble mécanique réglable latéralement et contrôlé depuis le levier (43). Cet ensemble comprenant un tube carré (36) qui s'emboîte dans le support (35) et sur lequel une potence mobile(37) permet de régler la hauteur .Le fil de fer est guidé par trois bobines (38) fixées sur un T mobile (39) lui-même fixé sur un tube carré (40) qui coulisse latéralement sur la potence (37) .Un ressort de rappel (41) et un câble (42) contrôlé par la personne assise sur le siège (8) à l'aide d'un levier(43) fixé entre le repose pied et le siège , ramène le T (39) à sa position initiale.
